# EUROPEAN PATENT SPECIFICATION

(11) **EP 0 655 618 B1**
(45) Date of publication and mention of the grant of the patent: **07.11.2001**
(21) Application number: 94303894.3
(22) Date of filing: 31.05.1994
(51) Int. Cl.: G01N 1/28, H01J 49/04

(54) **Secondary ion mass spectrometric analysis of metals and method of preparing standard sample therefor**
Verfahren zur Analyse von Metallen mittels Sekundärionenmassenspektrometrie und Verfahren zur Vorbereitung einer Standardprobe dafür
Méthode d'analyse par spectrométrie de masse à ions secondaires appliquées à l'analyse des métaux ainsi que méthode pour la réalisation d'un échantillon standard associé

(30) Priority: 30.11.1993 JP 32620693
(43) Date of publication of application: 31.05.1995
(73) Proprietor: National Institute of Advanced Industrial Science and Technology Ministryof Economy and Industry, Chiyoda-ku Tokyo (JP)
(72) Inventor: Oishi, Shoji, Tsukuba-shi, Ibaraki-ken (JP)
(74) Representative: Allam, Peter Clerk

(56) References cited:
- GB-A- 2 083 622
- ANALYTICAL CHEMISTRY, vol. 55, 1983, pages 1302-1305, XP002000625 DAVIS: "identification of naturally occuring quaternary compounds ..."
- ANALYTICAL CHEMISTRY, vol. 46, no. 11, 1974, pages 1487-1491, XP002000626 ISHIZUKA: "sims of rare earth elements"
- DATABASE WPI Week 9104 1991 Derwent Publications Ltd., London, GB; AN 91-028188 XP002000628 & SU-A-1 546 517 (AS UKR PHYS CHEM) , 28 February 1990
- INDUSTRIAL LABORATORY, vol. 42, no. 10, 1976, page 1713 XP002000627 MAGRILOVA: "spectral determination of aluminum"
- PATENT ABSTRACTS OF JAPAN vol. 12, no. 173 (P-706), 24 May 1988 & JP-A-62 284256 (SHIMADZU)

## Description

This invention relates to a method of analysing a metal component-containing sample for the determination of the concentration of the metal by secondary ion mass spectrometry and to a method of preparing a standard sample for use in such a secondary ion mass spectrometric analysis.

Ion mass spectrometric analysis has been applied to a variety of solid materials such as films, metals and dusts. In this technique, a sample is bombarded with an ion beam of, for example, 5-15 keV Ar⁺, to cause neutral atoms and ions to be ejected from the sample. These secondary positive ions are extracted into a mass spectrometer and analyzed. Details of this technique are disclosed in, for example, Morrison, G. H. *et al,* Analytical Chemistry, 47, 933 (1975) and Ishizuka, T., Analytical Chemistry, 46, 1487 (1974).

The conventional method using the secondary ion mass spectrometry has a problem because it is not applicable to the analysis of an insulating sample. While incorporation of carbon into the sample can solve the problem of static charging, another problem then arises because the carbon adversely affects the resolution of the mass spectrum. The conventional method poses a further problem because the intensity of the secondary ion varies when the sample is not homogeneous. This will be easily appreciated since the sample is bombarded with a micro beam. Additionally, in the conventional method, a relatively large amount of a sample is required.

In order to obtain exact quantitative analytical data by secondary ion mass spectrometric analysis, it is necessary to prepare a calibration curve using a standard sample having a known composition. No satisfactory method is, however, known in the art which can prepare a desired standard sample matching a sample to be measured.

A paper by Davis et al in Analytical Chemistry, Vol. 55, 1983 pages 1302-1305 describes the use of secondary ion mass spectrometry to identify the presence of alkaloids in plant materials. The samples were dissolved in either methanol or water and deposited for analysis on a silver or platinum foil, excess solvent being removed by gentle heating.

The present invention has been made in view of the above problems.

There is provided in accordance with one aspect of the present invention a method of analysing a solid, metal component-containing material by secondary ion mass spectrometry for the determination of the concentration of said metal, comprising the steps of:
(a) mixing said material with an aqueous liquid to dissolve said metal component in said liquid and to obtain an aqueous solution containing said metal;
(b) placing a drop of said solution on to an electrically conductive carbon surface of a supporting disc;
(c) drying said drop to form a solid layer on said supporting disc; and
(e) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

In another aspect, the present invention provides a method of analysing a metal component-containing aqueous solution by secondary ion mass spectrometry for the determination of the concentration of said metal, comprising the steps of:
(a) placing a drop of said solution on to an electrically conductive carbon surface of a supporting disc;
(b) drying said drop to form a solid layer on said supporting disc; and
(c) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

The present invention also provides a method of analysing a gaseous, metal component-containing material by secondary ion mass spectrometry for the determination of the concentration of said metal, comprising the steps of:
(a) contacting said material with an aqueous liquid to dissolve said metal component in said liquid and to obtain a solution containing said metal;
(b) placing a drop of said solution on to an electrically conductive carbon surface of a supporting disc;
(c) drying said drop to form a solid layer on said supporting disc; and
(e) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

The present invention further provides a method of preparing a standard sample for use in secondary ion mass spectrometric analysis, comprising the steps of:
(a) providing an aqueous solution of a first, reference metal or a compound thereof and at least one second metal or a compound thereof having a predetermined composition;
(b) placing a drop of said solution on to an electrically conductive carbon surface of a supporting disc; and
(c) drying said drop to form a solid layer on said supporting disc; and
wherein, before step (b), that portion of said electrically conductive carbon surface on which said drop is to be placed is treated with ethanol and then dried to improve the wettability of said portion with said solution.

The present invention will now be described in detail below with reference to the accompanying drawings, in which:
Fig. 1 is a calibration curve prepared using a standard sample obtained in Example 1 and showing a relationship between the ion intensity ratio (⁴⁸Ti⁺/⁵⁶Fe⁺) and the concentration of Ti based on Fe; and
Fig. 2 is a calibration curve prepared using a standard sample obtained in Example 1 and showing a relationship between the ion intensity ratio (⁵¹V⁺/⁵⁶Fe⁺) and the concentration of V based on Fe.

The present invention is directed to a method of the quantitative analysis of a metal-containing material by using a secondary ion mass spectrometer. Any commercially available ion micro analyzer (or ion microprobe mass analyzer) may be suitably used for the purpose of the present invention. Examples of such analyzers include Hitachi Ion Micro Analyzer (Hitachi Co., Ltd., Japan), The GCA Ion Microprobe Analytical Mass Spectrometer (GCA Technology Division, USA) and CAMECA IMS ion microscope (CAMECA Inc., France).

When the sample to be measured is a solid, metal component-containing material, the sample is first mixed with a suitable aqueous liquid to dissolve the metal component and to obtain an aqueous solution containing the dissolved metal. The metal component in the sample may be in the form of an elemental metal or a metal compound. The liquid to be used for the dissolution of the metal may be, for example, an aqueous acid solution such as aqueous nitric acid, sulfuric acid or hydrochloric acid. Any metal and metal compound may be analyzed in accordance with the method of this invention. Examples of such metals include Fe, Mn, Ti, V, Cr, Cu, Ni, Mg, Sn, Ga, Ta, Al, Zr, Cd, Pb, In, Zn, As, Ca, Mo, rare earth elements and mixtures two or more thereof.

The aqueous solution is then placed on an electrically conductive surface of a supporting disc. The amount of the solution placed on the disc is optional and is generally 0.00001 ml to 1 ml, preferably 0.0002 ml to 0.05 ml. Suitably, a drop of the solution is placed on the disc with the use of a syringe or a capillary tube. The disc is formed of carbon (graphite), or it may be a composite plate composed of an electrically insulating substrate and a graphite layer provided over the surface of the substrate. The size of the disc varies with the size of a holder of the ion microanalyzer used. Generally, the disc has a diameter of 5-30 mm and a thickness of 0.5-3 mm.

It is important that that portion of the disc on which the solution is to be applied be previously treated with ethanol for reasons of improved compatibility of the disc surface with the solution. Thus, the surface of the disc is wiped or applied with ethanol and then dried so that the treated portion has improved hydrophilicity. By this expedient, the drop of the aqueous solution can be uniformly applied on the disc.

The solution placed on the disc is then dried to form a solid, metal-containing layer. The drying is generally performed at a temperature from room temperature to 150°C, preferably 60-80°C.

When the sample to be measured is an aqueous liquid metal component-containing material, the sample is applied as such on to the electrically conductive carbon surface of the disc which has been pre-treated with ethanol and then dried, in the same manner as described above.

When the sample to be measured is a gaseous, metal component-containing material, the sample is contacted with an aqueous liquid such as an aqueous acid solution to dissolve the metal component in the liquid. The resulting solution is then applied on the electrically conductive carbon surface of the ethanol-treated disc and dried, again in the same manner described above. A high temperature waste gas containing Cd, Pb, Zn, Sn, As, Ca or a compound thereof (e.e. SbCl₃, MoCl₃ or FeCl₃) which is vaporized at a temperature in the range of, for example, 150°-300°C may be a typical example of the gaseous sample.

The disc bearing the solid layer is then mounted on a holder of an ion microanalyzer and is bombarded with a micro beam to measure the ion intensity in any suitable known manner.

The above technique can be applied for the preparation of standard samples used for preparing calibration curves. Thus, an aqueous solution of a first, reference metal (M₁) or a compound thereof and a second metal (M₂) or a compound thereof having a predetermined composition is first prepared. The solution is then applied on to an electrically conductive carbon surface of a supporting disc which has been pre-treated with ethanol and thereafter dried, in the same manner as the above, thereby obtaining the desired standard sample having known composition of the metals M₁ and M₂. In this case, it is advantageous to prepare a standard sample containing one standard metal and a plurality of metals having known composition so that the standard sample may be commonly used for the analysis of various metals.

By preparing various standard samples with different metal concentrations and by analysing these samples with the secondary ion mass spectrometer, a calibration curve representing a relationship between an ion intensity ratio (M₂⁺/M₁⁺) and a relative concentration of M₂ in M₁ can be obtained. Using the thus prepared calibration curve, the concentration of metal M₂ in a sample containing metals M₁ and M₂ can be determined according to the method of the present invention. In this case, the concentration of the reference metal M₁ should be determined by another method such as ICP-AES (inductively coupled plasma-atomic emission spectrometry).

When the sample to be measured contains Fe, it is recommendable to use Fe as the reference metal for the standard samples. However, any metal may be used as the reference metal of standard samples, irrespective of whether or not the metal is contained in the sample to be measured. For example, Y (yttrium) may be used as the reference metal of standard samples for the analysis of yttrium-free samples. In this case, the reference metal should be incorporated as an internal standard into the samples to be measured.

The following examples will further illustrate the present invention.

### Example 1

Dust sample obtained from a dust separator of an iron sintering furnace was analyzed for the amounts of Mn, Ti, V and Cr according to the method of the present invention. The dust sample was first analyzed by ICP-AES to reveal that the iron content was 42 % by weight.

### Preparation of Standard Samples:

Metallic iron was dissolved in hydrochloric acid to obtain an aqueous stock solution having an iron content of 1 % by weight (as elementary iron). A quantity of a second metal M₂ (Mn, Ti, V or Cr) was dissolved in 10 ml of the stock solution. A drop (0.002 ml) of the resulting second metal-containing solution was applied on a graphite disc having a diameter of 10 mm and a thickness of 1 mm and the disc was placed in an oven to dry the solution at 60°C. The above procedure was repeated in the same manner as described with various amounts of respective second metals.

### Construction of Calibration Curves:

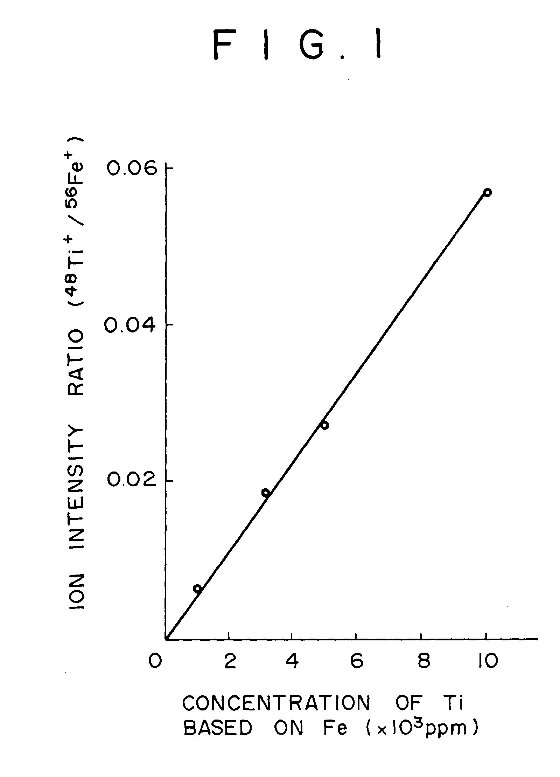

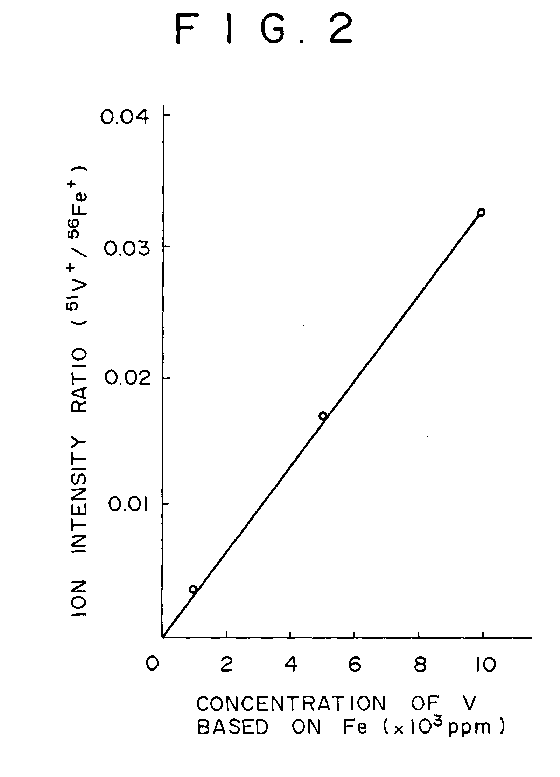

The thus prepared standard samples were subjected to secondary ion mass spectrometry using Ion Microanalyzer IMA-2 (manufactured by Hitachi Ltd.) to measure the ion intensities M₂⁺ and Fe⁺. The ratios M₂⁺/Fe⁺ were plotted against the concentrations of M₂ (% by weight) based on Fe to form calibration curves. Figs. 1 and 2 illustrates the calibration curves of Ti and V, respectively.

At a signal to noise ratio (S/N ratio) of 2, the detection limits of Ti and V were found to be 0.4 ppm (8x10⁻¹² g in 2 *µ*l) and 0.9 ppm (18x10⁻¹² g in 2 *µ*l), respectively, in terms of the content based on the weight of Fe.

The operating conditions of the ion microanalyzer were as follows:

| | |
|---|---|
| Primary ion | O₂⁺ |
| Primary ion accelerating potential | 10 kV |
| Primary ion current | 0.07-0.3 µA |
| Primary ion beam spot diameter | 800 µm |
| Degree of vacuum | 1.6-2.1 x 10⁻⁴ Pa |
| Slit | 0.5 mm |
| Multiplier voltage | 1.4 kV |

### Reproducibility Tests:

A number of similar standard samples were prepared and measured for ion intensities. The standard variation of the ion intensities was as summarized in Table 1 below.

**Table 1**

| Concentration of Second Metal Relative To Iron (µg/g) | Standard Variation (%) | |
|---|---|---|
| | Ti | V |
| 1,000 | 2.1 | 1.8 |
| 3,000 | 0.85 | 0.86 |
| 10,000 | 1.2 | 0.61 |

### Analysis of Dust Sample:

The dust sample was dissolved in a hydrochloric acid/hydrogen peroxide mixed solution. The solution was placed on a graphite disc and then dried in the same manner as that in the preparation of the standard samples. The disc bearing the dried sample was analyzed on the ion microanalyzer to measure ion intensities M₂⁺. Based on the M₂⁺/Fe⁺ ratio, the concentration of M₂ was determined from the calibration curves. The results are shown in Table 2 together with those determined by ICP-AES.

**Table 2**

| Metal | Secondary Ion Mass Spectrometry of the Present Invention (based on Fe) | ICP-AES (based on Fe) |
|---|---|---|
| Fe | - | 42 % |
| Mn | 0.64 % | 0.59 % |
| Ti | 0.52 % | 0.54 % |
| V | 510 ppm | 420 ppm |
| Cr | 60 ppm | 50 ppm |

## Claims

1. A method of analysing a solid, metal component-containing material by secondary ion mass spectrometry for the determination of the concentration of said metal, comprising the steps of:
(a) mixing said material with an aqueous liquid to dissolve said metal component in said liquid and to obtain an aqueous solution containing said metal;
(b) placing a drop of said solution on to an electrically conductive carbon surface of a supporting disc;
(c) drying said drop to form a solid layer on said supporting disc; and
(d) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

2. A method of analysing a metal component-containing aqueous solution by secondary ion mass spectrometry for the determination of the concentration of said metal, comprising the steps of:
(a) placing a drop of said solution on to an electrically conductive carbon surface of a supporting disc;
(b) drying said drop to form a solid layer on said supporting disc; and
(c) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

3. A method of analysing a gaseous, metal component-containing material by secondary ion mass spectrometry for the determination of the concentration of said metal, comprising the steps of:
(a) contacting said material with an aqueous liquid to dissolve said metal component in said liquid and to obtain a solution containing said metal;
(b) placing a drop of said solution on to an electrically conductive carbon surface of a supporting disc;
(c) drying said drop to form a solid layer on said supporting disc; and
(d) subjecting said solid layer on said supporting disc to a secondary ion mass spectrometric analysis; and
wherein, before step (b), that portion of said electrically conductive carbon surface on which said drop is to be placed is treated with ethanol and then dried to improve the wettability of said portion with said solution.

4. A method of preparing a standard sample for use in secondary ion mass spectrometric analysis, comprising the steps of:
(a) providing an aqueous solution of a first, reference metal or a compound thereof and at least one second metal or a compound thereof having a predetermined composition;
(b) placing a drop of said solution on to an electrically conductive carbon surface of a supporting disc; and
(c) drying said drop to form a solid layer on said supporting disc; and
wherein, before step (b), that portion of said electrically conductive carbon surface on which said drop is to be placed is treated with ethanol and then dried to improve the wettability of said portion with said solution.

## Patentansprüche

1. Verfahren zum Analysieren eines festen, eine Metallkomponente enthaltenden Materials mittels Sekundärionenmassenspektrometrie zur Bestimmung der Konzentration des Metalls, umfassend die Schritte des:
(a) Mischens des Materials mit einer wäßrigen Flüssigkeit, um die Metallkomponente in der Flüssigkeit zu lösen und eine das Metall enthaltende wäßrige Lösung zu erhalten;
(b) Aufbringens eines Tropfens der Lösung auf eine elektrisch leitfähige Kohlenstoffoberfläche einer Trägerscheibe;
(c) Trocknens des Tropfens, um eine feste Schicht auf der Trägerscheibe zu erzeugen; und
(d) Unterziehens der festen Schicht auf der Trägerscheibe einer Analyse mittels Sekundärionenmassenspektrometrie; und
wobei vor Schritt (b) der Teil der elektrisch leitfähigen Kohlenstoffoberfläche, auf welche der Tropfen aufzubringen ist, mit Ethanol behandelt und dann getrocknet wird, um die Benetzungsfähigkeit des Teils mit der Lösung zu verbessern.

2. Verfahren zum Analysieren einer eine Metallkomponente enthaltenden wäßrigen Lösung mittels Sekundärionenmassenspektrometrie zur Bestimmung der Konzentration des Metalls, umfassend die Schritte des:
(a) Aufbringens eines Tropfens der Lösung auf eine elektrisch leitfähige Kohlenstoffoberfläche einer Trägerscheibe;
(b) Trocknens des Tropfens, um eine feste Schicht auf der Trägerscheibe zu erzeugen; und
(c) Unterziehens der festen Schicht auf der Trägerscheibe einer Analyse mittels Sekundärionenmassenspektrometrie; und
wobei vor Schritt (b) der Teil der elektrisch leitfähigen Kohlenstoffoberfläche, auf welche der Tropfen aufzubringen ist, mit Ethanol behandelt und dann getrocknet wird, um die Benetzungsfähigkeit des Teils mit der Lösung zu verbessern.

3. Verfahren zum Analysieren eines gasförmigen, eine Metallkomponente enthaltenden Materials mittels Sekundärionenmassenspektrometrie zur Bestimmung der Konzentration des Metalls, umfassend die Schritte des:
(a) Inkontaktbringens des Materials mit einer wäßrigen Flüssigkeit, um die Metallkomponente in der Flüssigkeit zu lösen und eine das Metall enthaltende Lösung zu erhalten;
(b) Aufbringens eines Tropfens der Lösung auf eine elektrisch leitfähige Kohlenstoffoberfläche einer Trägerscheibe;
(c) Trocknens des Tropfens, um eine feste Schicht auf der Trägerscheibe zu erzeugen; und
(d) Unterziehens der festen Schicht auf der Trägerscheibe einer Analyse mittels Sekundärionenmassenspektrometrie; und
wobei vor Schritt (b) der Teil der elektrisch leitfähigen Kohlenstoffoberfläche, auf welche der Tropfen aufzubringen ist, mit Ethanol behandelt und dann getrocknet wird, um die Benetzungsfähigkeit des Teils mit der Lösung zu verbessern.

4. Verfahren zur Vorbereitung einer Standardprobe zur Verwendung bei der Analyse mittels Sekundärionenmassenspektrometrie, umfassend die Schritte des:
(a) Bereitstellens einer wäßrigen Lösung eines ersten Referenzmetalls oder einer Verbindung davon und wenigstens eines zweiten Metalls oder einer Verbindung davon mit einer vorherbestimmten Zusammensetzung;
(b) Aufbringens eines Tropfens der Lösung auf eine elektrisch leitfähige Kohlenstoffoberfläche einer Trägerscheibe; und
(c) Trocknens des Tropfens, um eine feste Schicht auf der Trägerscheibe zu erzeugen; und
wobei vor Schritt (b) der Teil der elektrisch leitfähigen Kohlenstoffoberfläche, auf welche der Tropfen aufzubringen ist, mit Ethanol behandelt und dann getrocknet wird, um die Benetzungsfähigkeit des Teils mit der Lösung zu verbessern.

## Revendications

1. Procédé d'analyse d'une matière solide contenant un composant métallique par spectrométrie de masse à ions secondaires pour déterminer la concentration dudit métal, comprenant les étapes consistant à :
(a) mélanger ladite matière avec un liquide aqueux afin de dissoudre ledit composant métallique dans ledit liquide et d'obtenir une solution aqueuse contenant ledit métal;
(b) placer une goutte de ladite solution sur une surface carbonée électriquement conductrice d'un disque support;
(c) sécher ladite goutte afin de former une couche solide sur ledit disque support;
(d) soumettre ladite couche solide sur ledit disque support à une analyse par spectrométrie de masse à ions secondaires; et
dans lequel, avant l'étape (b), la portion de ladite surface carbonée électriquement conductrice sur laquelle ladite goutte doit être placée, est traitée avec de l'éthanol, puis séchée afin d'améliorer la mouillabilité de ladite portion avec ladite solution.

2. Procédé d'analyse d'une solution aqueuse contenant un composant métallique par spectrométrie de masse à ions secondaires pour déterminer la concentration dudit métal, comprenant les étapes consistant à :
(a) placer une goutte de ladite solution sur une surface carbonée électriquement conductrice d'un disque support;
(b) sécher ladite goutte afin de former une couche solide sur ledit disque support;
(c) soumettre ladite couche solide sur ledit disque support à une analyse par spectrométrie de masse à ions secondaires; et
dans lequel, avant l'étape (b), la portion de ladite surface carbonée électriquement conductrice sur laquelle ladite goutte doit être placée, est traitée avec de l'éthanol, puis séchée afin d'améliorer la mouillabilité de ladite portion avec ladite solution.

3. Procédé d'analyse d'une matière gazeuse contenant un composant métallique par spectrométrie de masse à ions secondaires pour déterminer la concentration dudit métal, comprenant les étapes consistant à :
(a) mettre ladite matière en contact avec un liquide aqueux afin de dissoudre ledit composant métallique dans ledit liquide et d'obtenir une solution aqueuse contenant ledit métal;
(b) placer une goutte de ladite solution sur une surface carbonée électriquement conductrice d'un disque support;
(c) sécher ladite goutte afin de former une couche solide sur ledit disque support;
(d) soumettre ladite couche solide sur ledit disque support à une analyse par spectrométrie de masse à ions secondaires; et
dans lequel, avant l'étape (b), la portion de ladite surface carbonée- électriquement conductrice sur laquelle ladite goutte doit être placée, est traitée avec de l'éthanol, puis séchée afin d'améliorer la mouillabilité de ladite portion avec ladite solution.

4. Procédé de préparation d'un échantillon étalon en vue d'une utilisation dans une analyse par spectrométrie de masse à ions secondaires, comprenant les étapes consistant à :
(a) fournir une solution aqueuse d'un premier métal de référence ou d'un composé de celui-ci et au moins d'un deuxième métal ou d'un composé de celui-ci ayant une composition prédéterminée;
(b) placer une goutte de ladite solution sur une surface carbonée électriquement conductrice d'un disque support;
(c) sécher ladite goutte afin de former une couche solide sur ledit disque support; et
dans lequel, avant l'étape (b), la portion de ladite surface carbonée électriquement conductrice sur laquelle ladite goutte doit être placée, est traitée avec de l'éthanol, puis séchée afin d'améliorer la mouillabilité de ladite portion avec ladite solution.
